# EUROPÄISCHE PATENTSCHRIFT

(11) **EP 4 505 235 B1**
(45) Veröffentlichungstag und Bekanntmachung des Hinweises auf die Patenterteilung: **30.09.2026**
(21) Anmeldenummer: 23717496.6
(22) Anmeldetag: 04.04.2023
(51) Int. Cl.: G02B 26/08

(54) **MIKROMECHANISCHES BAUTEIL MIT EINEM BEWEGLICHEN AUSLENKELEMENT**
MICROMECHANICAL COMPONENT WITH A MOVABLE DEFLECTION ELEMENT
COMPOSANT MICROMÉCANIQUE AVEC UN ÉLÉMENT DE DÉVIATION MOBILE

(30) Priorität: 04.04.2022 DE 102022203334
(43) Veröffentlichungstag der Anmeldung: 12.02.2025
(73) Patentinhaber: Fraunhofer-Gesellschaft zur Förderung der angewandten Forschung e.V., 80686 München (DE)
(72) Erfinder: LASKE, Norman, 25524 Itzehoe (DE); GU-STOPPEL, Shanshan, 25524 Itzehoe (DE); WEN, Lianzhi, 25524 Itzehoe (DE)
(74) Vertreter: Pfenning, Meinig & Partner mbB
(86) Internationale Anmeldenummer: PCT/EP2023/058854
(87) Internationale Veröffentlichungsnummer: WO 2023/194385

(56) Entgegenhaltungen:
- EP-A1- 2 808 720
- DE-A1- 102008 049 647
- DE-A1- 102014 217 799
- US-A1- 2015 062 677
- US-A1- 2020 192 199

## Beschreibung

Die vorliegende Anmeldung liegt auf dem Gebiet der Mikrosysteme. Die Anmeldung betrifft ein mikromechanisches Bauteil, insbesondere ein auf dem piezoelektrischen Effekt basierendes MEMS-Bauteil (engl. Micro electro mechanical system, MEMS; dt. mikroelektromechanisches System). Insbesondere betrifft die vorliegende Anmeldung ein MEMS-Bauteil, bei dem ein Auslenkelement in einem resonanten oder quasistatischen oder kombinierten Betriebsmodus bewegt werden kann.

Im Allgemeinen können mikromechanische Bauteile unter anderem als MEMS-Spiegelscanner in Bereichen wie beispielweise Augmented-Reality-Displays, Lichterkennungs- und Entfernungsmessgeräte (LiDAR), 3D-Kameras oder in Projektionseinheiten für laserbasierte Werkzeuge zum Belichten, Schneiden oder Verschmelzen von Werkstoffen Anwendung finden. Weitere Anwendungen mikromechanischer Bauteile finden sich in Bereichen der Mikropumpen, Mikrolautsprecher, Inertialsensoren und Energie-Harvester. Charakteristische Merkmale eines mikromechanischen Bauteiles sind seine kompakte Größe und sein geringer Energieumsatz.

In der Regel umfasst ein MEMS-Bauteil mindestens ein bewegliches Auslenkelement sowie mindestens eine Feder, die eine elastische mechanische Verbindung zwischen einer Aufhängung und dem Auslenkelement herstellt. Die Feder ist in der Regel so ausgeführt, dass sie Torsions- und/oder Biegemomente übertragen kann. Weiterhin kann optional ein interner Aktuator oder eine Vielzahl an Aktuatoren als Funktionselemente vorhanden sein, die ebenfalls über eine Feder mit dem beweglichen Auslenkelement verbunden sind.

Ein Aktuator besteht vom Prinzip her aus zwei wesentlichen Teilen: Ein Wandler-Element überführt zugeführte elektrische Energie in eine andere Energieform, beispielsweise in eine mechanische Deformation, in ein magnetisches Feld, in ein elektrisches Feld oder in Wärme. Ein zweites Element koppelt diese vermittelnde Energie mit einer MEMS-Struktur, um sie in einer gewünschten Weise zu beeinflussen, etwa um Teile davon in Bewegung zu versetzen (sogenannte Aktuatorkopplung). Bei einem piezoelektrischen Element ist dies eine elastische Struktur, auf der eine piezoelektrische Schicht (das Wandler-Element) aufgetragen wird, um als Bimorph ein Biegemoment zu erzeugen. Bei einer externen Anregung kann die Aktuatorkopplung z.B. eine bewegliche Masse (Übertragung von Beschleunigungen) oder einen Permanentmagneten (Übertragung einer magnetischen Anregung) umfassen.

Bewegliche Auslenkelemente innerhalb eines MEMS-Bauteils können durch interne Aktuatoren oder externe Kräfte in Bewegung versetzt werden. Als Kräfte können hier auch Stöße oder Beschleunigungen verstanden werden. Dadurch können beispielsweise optische Elemente wie Mikrospiegel, Beugungsgitter oder Linsen eine Winkel- oder Positionsänderung erfahren. Ebenso können Masseelemente zwecks Detektion äußerer Kräfte oder Beschleunigungen durch interne Aktuatoren in Schwingung versetzt werden.

MEMS-Spiegelscanner - als eine Ausführungsform eines MEMS-Bauteils - sind dazu eingerichtet, einen eintreffenden optischen Strahl abzulenken und/oder eine Phasenverschiebung einer korrespondierenden elektromagnetischen Welle hervorzurufen. Eine Ablenkung und/oder Phasenverschiebung der eintreffenden elektromagnetischen Welle kann - unter Verwendung eines Aktuators - durch eine Verkippung und/oder eine Drehung und/oder eine Verschiebung eines im MEMS-Spiegelscanner enthaltenden Mikrospiegels verursacht werden. Es existieren verschiedene Methoden zur Ansteuerung eines MEMS-Spiegelscanners, um einen enthaltenden Mikrospiegel zu verkippen und/oder zu verdrehen und/oder zu verschieben. Eine piezoelektrische Ansteuerung, die auf einer Verformung eines piezoelektrischen Körpers bzw. einer piezoelektrischen Schicht basiert, ist vielversprechend, da piezoelektrische Körper sehr genau ansteuerbar sind, effiziente Krafterzeugung durch Umwandlung von elektrischer Energie in mechanische Auslenkung besitzen und somit generell einen geringen Leistungsverbrauch besitzen sowie leicht monolithisch in ein MEMS-Bauteil integriert werden können. Stand der Technik verwandter Art ist beispielsweise in der Druckschrift US 2009/185 253 A1 beschrieben.

Zur Einhaltung eines gewünschten Bewegungsverlaufs bzw. zur Kontrolle einer Position eines beweglichen Auslenkelementes (insbesondere eines Mikrospiegels) ist es oft erforderlich, ein Sensorsignal bereitzustellen, das mit einem tatsächlichen Bewegungsverlauf des beweglichen Auslenkelementes hinreichend gut korreliert. Auf diese Weise werden etwa Einflüsse von externen Kräften detektiert oder Eigenschwingungen gemessen. Bei MEMS-Bauteilen ist es aufgrund des mikroskopischen Maßstabs oft technisch aufwändig oder wirtschaftlich ungünstig, externe Sensoren direkt in die Komponente zu integrieren. Ein piezoelektrisch angetriebener Mikrospiegel ist als Stand der Technik verwandter Art beispielsweise in der Druckschrift DE 10 2014 217 799 A1 beschrieben.

Nachteilig bei vielen aus dem Stand der Technik bekannten mikromechanischen Bauteilen ist, dass das Sensorsignal mit einer Auslenkung des Aktuators, insbesondere eines piezoelektrischen Aktuators, überlagert ist und eine direkte Bestimmung der Position und der Positionsänderung des Auslenkelementes zumeist nicht möglich ist.

EP 2 808 720 A1 beschreibt Vorrichtungen mit Aktuatoren, daran angeordneten aktuatorseitigen Befestigungsbereichen, einem optischen Element mit daran angeordneten spiegelseitigen Befestigungsbereichen und Federn, wobei ein optisches Element über zwei oder vier Federn mit Aktuatoren verbunden ist.

US 2015/062677 A1 lehrt, ein mikromechanisches Bauteil derart auszubilden, dass durch die elastische Deformierung einer Blattfeder ein Spiegelelement verstellbar ist, wobei das Spiegelelement auf der Vorderseite der Blattfeder angeordnet ist.

DE 10 2008 049647 A1 offenbart mikromechanisches Bauteil mit einem beweglichen Auslenkelement sowie sechs Haltevorrichtungen zur Lagerung des Auslenkelements, wobei jede Haltevorrichtung jeweils eine Feder und ein Aufhängungselement aufweist und die Federn mit dem beweglichen Auslenkelement verbunden sind. Die sechs Haltevorrichtungen sind ausschließlich über das Auslenkelement miteinander gekoppelt, ohne dass eine direkte Verbindung zwischen den Haltevorrichtungen besteht. An einem der Aufhängungselemente ist ein Sensor angeordnet, der ausgebildet ist, ein unmittelbar von der Auslenkung des beweglichen Auslenkelements abhängiges Sensorsignal zu erzeugen. Vier der Aufhängungselemente umfassen jeweils einen Aktuator, der bei elektrischer Ansteuerung eine Auslenkung des Auslenkelements bewirkt, wobei der Sensor quadratförmig auf einer der Haltevorrichtungen ausgebildet ist und zwei auf benachbarten Haltevorrichtungen angeordnete Aktuatoren den Sensor teilweise umschließen.

US 2020/192199 A1 offenbart ein mikromechanisches Bauteil mit vier Halteelementen auf beiden Seiten des Funktionselements, wobei die beiden inneren mit jeweils einem strangförmigen piezoelektrischen Sensor versehen sind, und die beiden äußeren jeweils einen piezoelektrischen Aktuator tragen, die somit die Sensoren teilweise umschließen. Allerdings befinden sich Sensoren und Aktuatoren nicht auf ein- und demselben Halteelement.

Der vorliegenden Erfindung liegt dementsprechend die Aufgabe zugrunde, ein mikromechanisches Bauteil vorzuschlagen, das eine direkte Bestimmung der Position und/oder der Positionsänderung eines Auslenkelementes ermöglicht Die Aufgabe wird gelöst durch ein mikromechanisches Bauteil mit den Merkmalen des Anspruchs 1. Weiterbildungen ergeben sich mit den Merkmalen der abhängigen Ansprüche und der Ausführungsbeispiele.

Das vorgeschlagene mikromechanische Bauteil ist an die unterschiedlichsten Anwendungszwecke anpassbar, beispielsweise ist eine Verwendung als MEMS-Spiegelscanner, Beschleunigungssensor, Energie-Harvester und dergleichen möglich. Dabei können, wenn gewünscht, große Aktuator- und/oder Sensorflächen realisiert werden und es können breite Bauteilquerschnitte vorgesehen werden, die gegebenenfalls zur besseren Wärmeabfuhr genutzt werden können.

Das mikromechanische Bauteil umfasst ein bewegliches Auslenkelement und mindestens zwei das bewegliche Auslenkelement tragende Haltevorrichtungen, die jeweils eine Feder und jeweils ein Aufhängungselement umfassen, wobei die jeweils eine Feder und das bewegliche Auslenkelement miteinander verbunden sind. Das mikromechanisches Bauteil ist derart eingerichtet, dass die mindestens zwei Haltevorrichtungen - bevorzugt ausschließlich - über das Auslenkelement miteinander verbunden sind und an mindestens einem Aufhängungselement ein Sensor angeordnet ist, der ausgebildet ist, ein direkt von der Auslenkung des beweglichen Auslenkelements abhängiges Sensorsignal zu erzeugen.

Dass die beiden Haltevorrichtungen ausschließlich über das Auslenkelement miteinander verbunden sein können, soll so verstanden werden, dass keine weitere Verbindung, insbesondere keine weitere direkte und/oder indirekte Verbindung, zwischen den mindestens zwei Haltevorrichtungen besteht. Innerhalb des mikromechanischen Bauteils kann folglich keine (insbesondere mechanische und/oder direkte) Verbindung der Haltevorrichtungen vorgesehen sein. Es kann aber die zumindest indirekte Verbindung über das Auslenkelement vorliegen.

Die Haltevorrichtungen können jedoch außerhalb des Bauteils zumindest indirekt miteinander mechanisch verbunden sein. Dies kann zum Beispiel durch ein jeweiliges mechanisches Koppeln der Haltevorrichtungen mit einem gemeinsamen Rahmenelement oder einer anderen ein- oder mehrteiligen bauteilexternen Komponente erfolgen. Insbesondere kann eine mechanisch starre Kopplung oder, mit anderen Worten, Verankerung einer jeden Haltevorrichtung mit bzw. an einer solchen bauteilexternen Komponente erfolgen. Die Haltevorrichtungen können mit einem jeweiligen von dem Auslenkelement abgewandten Außenrand mit der bauteilexternen Komponente gekoppelt sein.

Zusammengefasst sieht eine Weiterbildung vor, dass neben einer optionalen mechanisch starren Verankerung aller Haltevorrichtungen an einer gemeinsamen bauteilexternen Komponente keine direkte Verbindung der Haltevorrichtungen untereinander vorliegt.

Die Erfindung betrifft auch eine Anordnung aus einer bauteilexternen Komponente und einem mikromechanischen Bauteil gemäß jeglicher hier offenbarten Variante, insbesondere wobei die Haltevorrichtungen des Bauteils mit der bauteilexternen Komponente verbunden und vorzugsweise jeweils mechanisch starr damit gekoppelt sind.

Das Sensorsignal, das direkt von der Auslenkung des beweglichen Auslenkelements abhängt, ist als ein Sensorsignal zu verstehen, das nicht durch eine Bewegung einer anderen Haltevorrichtung überlagert wird.

Indem die mindestens zwei Haltevorrichtungen ausschließlich über das Auslenkelement miteinander verbunden sind und an mindestens einem Aufhängungselement ein Sensor angeordnet ist, können unter Verwendung des Sensors eine Position und/oder eine Positionsänderung des Auslenkelementes direkt bestimmt werden.

Gemäß einer Ausführungsform liegen ein optionaler Sensor und ein optionaler Aktuator, die jeweils an der Haltevorrichtung angeordnet bzw. hiervon umfasst sein können, auf einer Linie mit dem Auslenkelement. Diese Linie kann z.B. in einer Draufsicht definiert sein, bei der die Haltevorrichtungen einem Betrachter zugewandt sind, insbesondere wobei flächenmäßig größte Anteile der Haltevorrichtungen einem Betrachter zugewandt sind. Zusätzlich oder alternativ kann die Draufsicht einer Projektion von Sensor, Aktuator und Auslenkelement in eine gemeinsame (virtuelle) Ebene entsprechen. Diese Ebene kann parallel zu flächenmäßig größten Anteilen der Haltevorrichtungen verlaufen und/oder parallel zu an einer bauteilexternen Komponenten verankerten Randbereichen der Haltevorrichtungen. Das Anordnen von Sensor und Aktuator auf einer Linie mit dem Auslenkelement schließt also nicht aus, dass sich diese Bauteile in unterschiedlichen Ebenen befinden, was optional vorgesehen sein kann.

Die Linie kann wenigstens einen Teil und vorzugsweise einen Flächenschwerpunkt des Sensors und/oder Aktuators schneiden (zumindest in Draufsicht oder bei Projektion, wir zuvor geschildert). Alternativ oder zusätzlich kann sie eine Symmetrieachse des Sensors und/oder Aktuators definieren, insbesondere eine Spiegelsymmetrieachse.

In der Regel wird das mikromechanische Bauteil durch Aufschichten von Metallen, Halbleitern und/oder Isolatoren auf einem Substrat, insbesondere einem Siliziumsubstrat oder einem Silizium-auf-Isolator (engl. silicon on insulator, SOI) Substrat und anschließender Strukturierung hergestellt. Es kann vorgesehen sein, Halbleitermaterialien wie beispielsweise Si, SiC, AlN, GaN, InN, AlP, GaP, InP, AlAs, GaAs und InAs sowie die zugehörigen ternären Verbindungshalbleiter zu verwenden. Für eine hohe Leitfähigkeit kann das Halbleitermaterial n-dotiert, p-dotiert oder intrinsisch leitfähig sein. Als Metalle und/oder Basis für Metalllegierungen können insbesondere Al, Cr, Cu, Mo, Ta, Au und Pt verwendet werden.

Das mikromechanische Bauteil kann insbesondere eingerichtet sein, einen resonanten, quasistatischen und/oder nicht-resonant periodischen Betrieb auszuführen. Ein resonanter Betrieb des mikromechanischen Bauteils basiert auf einer Anregung einer oder mehrerer charakteristischer Eigenschwingungen des mikromechanischen Bauteils. Durch ein sukzessives Aufschwingen kann das Auslenkelement einer oszillierenden Trajektorie folgen. Die Anregung kann durch externe Kräfte oder interne Aktuatoren stattfinden.

Als quasistatischer Betrieb wird eine Funktionsweise des mikromechanischen Bauteils verstanden, die es ermöglicht, eine Lage, wie Position und Neigung des Auslenkelementes, durch externe Kräfte oder interne Aktuatoren beliebig zu verändern und an jeder Position für eine bestimmte Zeit konstant zu halten. Dabei können im quasistatischen Betrieb jederzeit Eigenschwingungen des mikromechanischen Bauteils auftreten, ohne dass dies als resonanter Betrieb gilt. Insbesondere kann der quasistatische Betrieb auch eine nicht-resonante Bewegung umfassen.

Ferner kann eine Kombination aus quasistatischem und resonantem Betrieb des mikromechanischen Bauteils vorgesehen sein. Eine Kombination aus quasistatischem und resonantem Betrieb des mikromechanischen Bauteils kann erzielt werden, indem beispielsweise das mikromechanische Bauteil entlang einer Bewegungsrichtung quasistatisch und entlang einer anderen Bewegungsrichtung resonant betrieben wird. Dies ist beispielsweise bei sogenannten Rasterscannern der Fall, womit bezweckt wird, dass die Auslenkung entlang der resonanten Bewegungsrichtung groß ist und die Auslenkung entlang der quasistatischen Bewegungsrichtung beliebig kontrolliert werden kann.

Es kann vorgesehen sein, dass das Auslenkelement des mikromechanischen Bauteils eine 1-dimensionale, 2-dimensionale und/oder eine 3-dimensionale Bewegung ausführt. Unter einer 1-dimensionalen Bewegung kann eine Bewegung in einer Neigungsrichtung verstanden werden. Unter einer 2-dimensionalen Bewegung kann eine Bewegung in zwei Neigungsrichtungen verstanden werden. Unter einer 3-dimensionalen Bewegung kann eine Bewegung in zwei Neigungsrichtungen und einer zusätzlichen Hubbewegung verstanden werden. Das mikromechanische Bauteil kann dabei als 1-dimensionales, 2-dimensionales oder 3-dimensionales mikromechanisches Bauteil bezeichnet werden.

Das Auslenkelement kann optische Elemente wie Mikrospiegel, Beugungsgitter und/oder Linsen umfassen. Ferner kann das Auslenkelement als ein Mikrospiegel oder ein Masseelement ausgebildet sein. Das Auslenkelement kann Halbleitermaterialien wie beispielsweise Si, SiC, AlN, GaN, InN, AlP, GaP, InP, AlAs, GaAs und InAs sowie die zugehörigen ternären Verbindungshalbleiter umfassen. Das Auslenkelement kann weiterhin Isolatorschichten - die beispielsweise Glas umfassen - und/oder Metallschichten aufweisen. Falls das Auslenkelement als ein Mikrospiegel ausgebildet ist, kann der Mikrospiegel eine lichtreflektierende Spiegelschicht umfassen. Insbesondere eignen sich Metalle oder Metalllegierungen als lichtreflektierende Spiegelschicht, da Metalle einen hohen Reflexionsgrad im sichtbaren und infraroten Spektralbereich (Wellenlängen 400 nm - 2000 nm) aufweisen. In anderen Ausführungsformen umfasst die lichtreflektierende Spiegelschicht ein Halbleitermaterial. In weiteren Ausführungsformen umfasst die lichtreflektierende Spiegelschicht eine Stapelung verschiedener dielektrischer Schichten, die eine spektrale Filterung ermöglichen.

Die jeweils eine Feder und das jeweils eine Aufhängungselement der mindestens zwei Haltevorrichtungen können vorzugsweise Halbleitermaterialien wie beispielsweise Si, SiC, AlN, GaN, InN, AlP, GaP, InP, AlAs, GaAs und InAs sowie die zugehörigen ternären Verbindungshalbleiter umfassen. Prinzipiell könnte auch ein anderes Material, beispielsweise Metall, verwendet werden, das die mechanische Funktion der Elastizität erfüllt. Allerdings ist die feine lithografische Strukturierbarkeit der Halbleitermaterialien für das Design der Federn von großem Vorteil, wenn das Bauteil insgesamt klein sein soll.

Es kann vorgesehen sein, dass sich die mindestens zwei Haltevorrichtungen in einer Ebene befinden. Die jeweils eine Feder und das jeweils eine Aufhängungselement können direkt miteinander verbunden sein. In anderen Ausführungsformen können die jeweils eine Feder und das jeweils eine Aufhängungselement indirekt miteinander verbunden sein. Insbesondere können zwischen der jeweils einen Feder und dem jeweils einen Aufhängungselement weitere mechanische Elemente, wie beispielsweise ein Dämpfungselement, angeordnet sein.

Insbesondere sind die mindestens zwei Haltevorrichtungen ausschließlich über das Auslenkelement mechanisch miteinander verbunden. Dass die beiden Haltevorrichtungen ausschließlich über das Auslenkelement miteinander mechanisch verbunden sind, soll so verstanden werden, dass keine weitere Verbindung, insbesondere keine weitere direkte und/oder indirekte (beziehungsweise mechanische) Verbindung, zwischen den mindestens zwei Haltevorrichtungen besteht.

Es kann vorgesehen sein, dass das mindestens eine Aufhängungselement einen Aktuator umfasst, der ausgebildet ist, bei elektrischer Ansteuerung eine Auslenkung des Auslenkelements hervorzurufen. Der Aktuator kann insbesondere ein piezoelektrischer Aktuator sein.

Es können alle Arten von Bimorph-Aktuatoren und thermische Aktuatoren verwendet werden. Beispielsweise können Elemente unterschiedlicher Materialien, wie Metalle, kombiniert werden, die aus zwei übereinander liegenden Schichten dieser unterschiedlichen Materialien bestehen. Die beiden Schichten sind dabei miteinander stoffschlüssig und/oder formschlüssig verbunden. Durch die unterschiedlichen Wärmeausdehnungskoeffizienten der verwendeten Materialien dehnt sich eine der Schichten stärker aus als die andere, wodurch sich das Element biegt. Im MEMS-Bereich kann es prozesstechnisch vorteilhaft sein, etwa Silizium und ein Metall zu kombinieren.

Weiterhin können kapazitive Aktuatoren verwendet werden.

Der piezoelektrische Aktuator kann auf dem piezoelektrischen Effekt basieren. Eine piezoelektrische Ansteuerung, die auf einer Verformung eines piezoelektrischen Körpers basiert, ist vielversprechend, da piezoelektrische Körper sehr genau ansteuerbar sind, effiziente Krafterzeugung durch Umwandlung von elektrischer Energie in mechanische Auslenkung besitzen und somit generell einen geringen Leistungsverbrauch besitzen sowie leicht monolithisch integriert werden können. Als Material für eine piezoelektrische Schicht des piezoelektrischen Aktuators kann das piezoelektrische Material Blei-Zirkonat-Titanat (PZT) verwendet werden. Die Dicke der piezoelektrischen Schicht beträgt typischerweise 1-10 µm. Die piezoelektrische Schicht wird beispielsweise durch eine Kathodenzerstäubung gebildet. Der Aktuator kann weiterhin zwei Elektroden aufweisen. Die Elektroden können Metalle und/oder Metalllegierungen umfassen. Außerdem können die Elektroden Halbleiterschichten - insbesondere dotierte Halbleiterschichten - umfassen. Der Aktuator kann eingerichtet sein, das Auslenkelement 1-dimensional, 2-dimensional oder 3-dimensional auszulenken. Der Aktuator kann mit der Feder direkt oder indirekt verbunden sein. Insbesondere kann der Aktuator eingerichtet sein, eine Auslenkung des Auslenkelementes über die jeweils eine Feder hervorzurufen.

Der Aktuator kann beispielsweise einen Stapel aus einer ersten Elektrodenschicht (z. B. Titan und/oder Platin), einer Blei-Zirkonat-Titanat-Schicht und einer zweiten Elektrodenschicht (z. B. Chrom und/oder Gold) aufweisen. Die Blei-Zirkonat-Titanat-Schicht (beispielsweise mit einer Schichtdicke von 2 µm) kann beispielsweise auf die erste Elektrodenschicht aufgesputtert werden, insbesondere unter Verwendung einer heißen Magnetfeldröhre.

Ferner kann der mindestens eine Sensor von dem zumindest einen Aktuator vollständig galvanisch getrennt sein.

Unter galvanischer Trennung (auch galvanische Entkopplung oder Potentialtrennung) kann das Vermeiden der elektrischen Leitung zwischen zwei Stromkreisen verstanden werden. Vorteilhaft kann dadurch eine elektrische Überlagerung zwischen einem elektrischen Sensorsignal und einem elektrischen Aktuatorsignal verhindert werden. Dadurch kann die Position des Auslenkelementes noch genauer bestimmt werden. Die galvanische Trennung kann insbesondere durch Schichten mit einer niedrigen Leitfähigkeit - insbesondere Isolatorschichten und/oder Halbleiterschichten - realisiert werden. In anderen Ausführungsformen kann die galvanische Trennung durch einen Luftspalt erreicht werden.

Ferner kann der Sensor ein piezoelektrischer Sensor oder ein piezoresistiver Sensor sein. Gegebenenfalls kann als Sensor ein Dehnungsmessstreifen-Sensor verwendet werden, der Metalle und/oder Halbleiter aufweisen kann. Die piezoresistiven Sensoren können piezoresistive Halbleiter umfassen, die aufgrund einer Verzerrung der Kristallstruktur über einen geometrischen Effekt hinaus eine hohe Widerstandsänderung aufweisen. Piezoresistive Sensoren können vorteilhaft sein, da sie einfach herzustellen sind, einen großen Messbereich abdecken und leicht monolithisch in ein mikromechanisches Bauteil integrierbar sind.

In der Regel können für den piezoelektrischen Sensor piezoelektrische Materialien mit hohen piezoelektrischen Koeffizienten, wie beispielsweise Aluminium-Nitrid (AlN) und/oder Aluminium-Scandium-Nitrid (AlScN) und/oder Blei-Zirkonat-Titanat (PZT) und/oder Blei-Magnesium-Niobat (PMN), verwendet werden.

Als piezoresistives Material für einen piezoresistiven Sensor eignen sich insbesondere Materialien mit hohen piezoresistiven Koeffizienten, insbesondere Halbleitermaterialien, wie beispielsweise dotiertes Silizium.

Der Sensor kann monolithisch auf einer Trägerschicht des mindestens einen Aufhängungselements integriert werden. Insbesondere kann der Sensor auf einer Oberfläche der Trägerschicht angeordnet sein. Die Trägerschicht kann Isolatorschichten, Halbleiterschichten und/oder Metallschichten umfassen.

Durch hohe Kristallfeldenergien besitzen insbesondere Halbleitermaterialien eine hohe Steifigkeit und können vorteilhaft als Trägerschichten verwendet werden. Es kann vorgesehen sein, Halbleitermaterialien wie beispielsweise Si, SiC, AlN, GaN, InN, AlP, GaP, InP, AlAs, GaAs, InAs sowie die zugehörigen ternären Verbindungshalbleiter als Trägerschicht der Aufhängungselemente zu verwenden.

Der Sensor kann insbesondere eingerichtet sein, sich auf Grund der Auslenkung des Auslenkelementes zu verformen. Die Auslenkung des Auslenkelementes kann durch die jeweils eine Feder auf den Sensor übertragen werden.

Der Sensor kann beispielsweise einen Stapel aus einer ersten Elektrodenschicht (z. B. Titan und/oder Platin), einer Blei-Zirkonat-Titanat-Schicht und einer zweiten Elektrodenschicht (z. B. Chrom und/oder Gold) aufweisen. Die Blei-Zirkonat-Titanat-Schicht (beispielsweise mit einer Schichtdicke von 2 µm) kann beispielsweise auf die erste Elektrodenschicht aufgesputtert werden, insbesondere unter Verwendung von Magnetron-Sputtern.

Ferner kann die jeweils eine Feder das jeweils eine Aufhängungselement mit dem Auslenkelement verbinden. Die Feder kann zwischen dem jeweils einen Aufhängungselement und dem Auslenkelement angeordnet sein.

Dadurch kann eine Auslenkung des Auslenkelementes vorteilhaft an das Aufhängungselement, insbesondere an den Sensor des Aufhängungselementes, weitergeleitet werden. Die Feder kann ein Halbleitermaterial und/oder ein Metall umfassen. Die Feder kann eingerichtet sein, sich auf Grund der Auslenkung des Auslenkelementes zu verformen. Die Feder, das Aufhängungselement und das Auslenkelement können in einer Ebene liegen.

Der Sensor und/oder der Aktuator können sich in einem Betrieb hysteresefrei verhalten. Der Sensor und/oder der Aktuator können insbesondere aus piezoelektrischen Materialen mit linearem Betriebsverhalten bestehen, die insbesondere einem Ladungszustand des piezoelektrischen Materials eindeutig einen Deformationszustand des piezoelektrischen Materials zuordnet. Ein solches Material kann beispielsweise AlN oder AlScN sein.

Unter einem linearen Betriebsverhalten des Sensors und/oder des Aktuators kann eine Linearität zwischen der Verformung beziehungsweise Deformation des piezoelektrischen Materials und der erzeugten elektrischen Polarisation verstanden werden. Dadurch kann eine Position des Auslenkelementes sehr genau bestimmt werden. Insbesondere kann eine Position des Auslenkelementes über eine Vielzahl von Auslenkungen genau bestimmt werden. Dadurch, dass der Sensor und/oder der Aktuator sich in einem Betrieb hysteresefrei verhalten, kann einem Ladungszustand des piezoelektrischen Materials eindeutig ein Deformationszustand des piezoelektrischen Materials zugeordnet werden. Der Ladungszustand des piezoelektrischen Materials kann durch Ladungsverschiebungen innerhalb der Elementarzellen des piezoelektrischen Materials verursacht werden, die durch elektrische Polarisation hervorgerufen werden.

Die elektrische Polarisation kann durch eine Verzerrung (engl. strain) der Elementarzellen eines Kristallgitters des piezoelektrischen Materials des Sensors entstehen. Die Verzerrung der Elementarzelle entsteht durch die Auslenkung des Auslenkelementes. Dabei kann es vorteilhaft sein, wenn die elektrische Polarisation linear auf eine Verzerrung des piezoelektrischen Materials des piezoelektrischen Sensors reagiert. Dadurch kann einem Ladungszustand des piezoelektrischen Materials eindeutig ein Deformationszustand des piezoelektrischen Materials zugeordnet werden. Durch die Eindeutigkeit des Deformationszustands des piezoelektrischen Materials kann die Position des Auslenkelementes eindeutig bestimmt werden.

Der piezoelektrische Aktuator oder Sensor kann in Dünnschichttechnologie wie ein Kondensator aufgebaut werden.

Weiterhin kann eine Speicherung einer elektrischen Ladung des Sensors ohne extrinsische Einflüsse eine Halbwertszeit von mehr als einer Minute, vorzugsweise mehr als fünf Minuten aufweisen.

Unter Halbwertszeit oder Halbwertzeit kann die Zeitspanne verstanden werden, nach der die elektrische Ladung die Hälfte ihres Ausgangswertes erreicht hat. Eine Halbwertzeit von mehr als einer Minute ist vorteilhaft, da so die Position des Auslenkelementes über eine lange Zeit bestimmt werden kann. Dies kann ermöglichen, ein Signal zu erzeugen, das entweder mit der Position oder mit der Positionsänderung des beweglichen Auslenkelements korreliert.

Im idealen Fall bleibt eine elektrische Polarisationsspannung - die durch die Verzerrung der Elementarzellen eines Kristallgitters des piezoelektrischen Materials hervorgerufen wird - so lange erhalten, wie der Deformationszustand des piezoelektrischen Materials erhalten bleibt. Bei Rückkehr in einen deformationsfreien Zustand des piezoelektrischen Materials kann das elektrische Potenzial - insbesondere die Polarisation - wieder abgebaut werden und die elektrische Polarisationsspannung verschwindet.

Ein realer piezoelektrischer Sensor dagegen kann Leckströme aufweisen, durch die die Spannung mit der Zeit abgebaut wird. Leckströme können als elektrische Ströme zwischen einer Bodenelektrode und einer oberen Elektrode eines als Plattenkondensator aufgebauten piezoelektrischen Sensors verstanden werden. Solche Leckströme fließen nicht über einen externen Schaltkreis, sondern in unkontrollierter Weise durch die piezoelektrische Schicht oder an deren Rändern.

Leckströme können durch Abweichungen der realen Kristallstruktur von der idealen Kristallstruktur entstehen. Insbesondere können Punktdefekte, Versetzungen, Stapelfehler und/oder Korngrenzen zu Leckströmen führen. Darüber hinaus können Oberflächen- und/oder Grenzflächenströme zwischen der unteren und der oberen Elektrode Leckströme verursachen. Aufgrund der Leckströme kann eine elektrische Spannung des Sensors im deformationsfreien Zustand negativ sein. Dieses Driftverhalten kann zeitlich variieren und kann in einem Ersatzschaltbild eines piezoelektrischen Sensors als Stromquelle mit einem Widerstand dargestellt werden, wobei die Stromquelle den Stromfluss aufgrund einer von Deformationszustandsänderungen bedingten elektrischen Polarisationsänderung ausdrückt und der Widerstand den Leckstrom symbolisiert.

Durch eine hohe Halbwertszeit kann ein piezoelektrischer Sensor zur Detektion von zeitlichen Änderungen des Deformationszustands des mikromechanischen Bauteils eingesetzt werden, indem hauptsächlich der elektrische Stromfluss zwischen den Elektroden gemessen wird. Dies wird häufig gewählt, um die Auswirkung einer Selbstentladung des Sensors zu minimieren, indem eine erzeugte Ladung unmittelbar abgeführt wird. Dadurch kann die durch Messungen bestimmte Selbstentladung als ein elektrischer Widerstand modelliert werden, der parallel zu einer Kapazität des piezoelektrischen Materials liegt.

Weiterhin kann ein piezoelektrischer Sensor zur Detektion des aktuellen mechanischen Zustands des mikromechanischen Bauteils eingesetzt werden, indem hauptsächlich die elektrische Spannung über die Elektroden gemessen wird. Dies setzt voraus, dass die Selbstentladung sehr gering (d.h. die Halbwertzeit sehr hoch) ist. Dadurch kann eine elektrische Ladung des Sensors über einen längeren Zeitraum gehalten werden, um ein hinreichend akkurates Signal über die aktuelle Position zu erzeugen, wenn diese für einen gewissen Zeitraum unverändert bleibt. Beispielsweise kann ein AlScN-Material als piezoelektrisches Material verwendet werden, bei dem sich über einen Zeitraum von 10 Minuten die Ladung auf die Hälfte abbaut. Bei typischen mikromechanischen Bauteilen werden quasistatische Positionsänderungen im Bereich von einigen hundert Mikrosekunden bis zu mehreren Sekunden durchgeführt bzw. Resonanzfrequenzen im Bereich von 1 kHz bis 100 kHz verwendet.

In weiteren Ausführungsformen kann das mikromechanische Bauteil eine Auswerteeinheit umfassen, die eingerichtet ist, das Sensorsignal auszuwerten und eine momentane Position und/oder Positionsänderung des Auslenkelements zu bestimmen. Die momentane Position und/oder Positionsänderung kann aus einer resonanten, quasistatischen und/oder nicht-resonant periodischen Bewegung des Auslenkelements resultieren.

Eine resonante Bewegung des mikromechanischen Bauteils kann auf einer Anregung einer oder mehrerer charakteristischer Eigenschwingungen des mikromechanischen Bauteils basieren. Durch ein sukzessives Aufschwingen kann das Auslenkelement einer oszillierenden Trajektorie folgen. Die Anregung kann durch externe Kräfte oder interne Aktuatoren stattfinden.

Als quasistatische Bewegung kann eine Bewegung des Auslenkelements des mikromechanischen Bauteils verstanden werden, die an beliebigen Positionen eine bestimmte Verweildauer oder eine bestimmte Geschwindigkeit aufweist. Dabei können bei der quasistatischen Bewegung jederzeit Eigenschwingungen des mikromechanischen Bauteils auftreten, ohne dass dies als resonante Bewegung gilt.

Ferner kann eine Kombination aus quasistatischer und resonanter Bewegung vorgesehen sein. Eine Kombination aus quasistatischer und resonanter Bewegung des mikromechanischen Bauteils kann erzielt werden, indem beispielsweise das mikromechanische Bauteil entlang einer Bewegungsrichtung quasistatisch und entlang einer anderen Bewegungsrichtung resonant betrieben wird. Dies ist beispielsweise bei sogenannten Rasterscannern der Fall, womit bezweckt wird, dass die Auslenkung entlang der resonanten Bewegungsrichtung groß ist und die Auslenkung entlang der quasistatischen Bewegungsrichtung beliebig kontrolliert werden kann.

Als nicht-resonante Bewegung kann eine Bewegung verstanden werden, die keine Eigenschwingungen des mikromechanischen Bauteils aufweist.

Durch eine hohe Halbwertzeit des piezoelektrischen Materials des piezoelektrischen Sensors kann - insbesondere im resonanten Betrieb - ein Sensorsignal nicht nur auf eine Phasenbeziehung zwischen dem Aktuator und dem Sensor beschränkt sein. Insbesondere kann dadurch direkt eine absolute Position des Auslenkelementes im resonanten Betrieb bestimmt werden.

Weiterhin kann durch eine hohe Halbwertzeit des piezoelektrischen Materials des piezoelektrischen Sensors - insbesondere im quasistatischen Betrieb - eine genaue Positionsmessung des Auslenkelementes erreicht werden.

Im nicht-resonant periodischen Betrieb des piezoelektrischen Sensors können durch eine hohe Halbwertzeit des piezoelektrischen Materials des piezoelektrischen Sensors eine Überwachung und insbesondere eine Auswertung der Spannungs- und/oder Stromamplitude des Sensors vorteilhaft durchgeführt werden.

Ein Aufhängungselement kann sowohl einen Sensor als auch einen Aktuator aufweisen.

Auf diese Weise kann das mikromechanische Bauteil eine Vielzahl von Sensoren und Aktuatoren aufweisen. Dies ermöglicht eine besonders genaue Positionsbestimmung und eine besonders genaue Auslenkung in einem weiten Bereich von Raumrichtungen des Auslenkelementes.

Insbesondere kann der Sensor räumlich getrennt von dem Aktuator sein. In dieser Ausführungsform kann bei gleichzeitiger Benutzung des Sensors (Sensorbetrieb) und des Aktuators (Aktuatorbetrieb) an einem Aufhängungselement das Sensorsignal mit der Auslenkung des Aktuators überlagert werden.

Der Sensor und der Aktuator können elektrisch und/oder galvanisch voneinander getrennt sein. Insbesondere kann eine Trennung durch einen Isolator mit einer niedrigen Leitfähigkeit erreicht werden. Dies ermöglicht, eine Auslenkung des Auslenkelementes durch den Aktuator hervorzurufen und zeitgleich mit dem Sensor die Auslenkung zu messen, insbesondere zur Überwachung. Dies ist insbesondere dann vorteilhaft, wenn das Auslenkelement während der Messung eine Bewegung vollziehen soll.

Der Aktuator kann größer sein als der Sensor, insbesondere mehr als doppelt so groß, vorzugsweise etwa zehnmal so groß.

Insbesondere kann ein Flächenverhältnis Sensor : Aktuator unter 0,5, bevorzugt unter 0,1 liegen. Das Flächenverhältnis kann in diesem Zusammenhang als das Verhältnis zwischen den wirksamen Schichtflächen des piezoelektrischen Materials des Sensors und des piezoelektrischen Materials des Aktuators verstanden werden. Dadurch kann eine Auslenkung des Auslenkelements durch den Aktuator und eine Bestimmung einer Auslenkung des Auslenkelements mit einer hohen Genauigkeit erreicht werden.

Der Sensor kann so positioniert sein, dass er bei einer Auslenkung des Auslenkelementes eine hohe Biegung erfährt. Ferner können der Aktuator und der Sensor eine gemeinsame Symmetrieachse aufweisen.

Auf diese Weise kann eine genaue Bestimmung der Position des Auslenkelementes - insbesondere durch ein großes Sensorsignal - erreicht werden. Insbesondere kann der Sensor so positioniert sein, dass ein piezoelektrisches Material des Sensors bei einer Auslenkung des Auslenkelementes eine hohe, insbesondere maximale, Verzerrung erfährt. Aufgrund der hohen Verzerrung kann eine hohe elektrische Polarisation erreicht werden, die ein großes Sensorsignal, insbesondere eine große Polarisationsspannung und/oder einen großen elektrischen Strom, verursacht.

Der Aktuator und der Sensor können eine gemeinsame Rotationsachse und/oder Translationsachse aufweisen.

Das Aufhängungselement kann mit einem piezoelektrischen Element versehen sein, das sowohl als Sensor als auch als Aktuator verwendbar ist. Ferner kann das mikromechanische Bauteil eine Umschalteinheit umfassen, die ausgebildet ist, zwischen einem Sensorbetrieb und einem Aktuatorbetrieb des piezoelektrischen Elementes umzuschalten.

Dadurch kann die Anzahl der verwendeten Sensoren und/oder Aktuatoren variiert werden. Dies ermöglicht eine besonders genaue Positionsbestimmung und eine besonders genaue Auslenkung in einem weiten Bereich von Raumrichtungen des Auslenkelementes. Beispielsweise kann ein gleichphasiges Ansteuern aller Aktuatoren eine Hubbewegung realisieren.

Insbesondere weisen der Sensor und der Aktuator denselben Schichtaufbau auf. Es kann vorgesehen werden, dass der Sensor und der Aktuator eine unterschiedliche externe elektrische Ansteuerung erfahren. Insbesondere kann die Umschalteinheit zwischen der unterschiedlichen elektrischen Ansteuerung umschalten.

Beispielsweise wird zu einem Zeitpunkt eine piezoelektrische Schicht des Aktuators aufgeladen, sodass das Aufhängungselement einen gewünschten Biegezustand einnimmt. Insbesondere, wenn das verwendete lineare piezoelektrische Material eine geringe Selbstentladung aufweist (d.h. eine hohe Halbwertzeit besitzt), hält das piezoelektrische Material den Biegezustand aufrecht und kann nun als Sensor verwendet werden. In diesem Betriebsmodus wird ein Ladezustand des piezoelektrischen Materials hochohmig ausgelesen. Weicht die Position des Auslenkelementes in diesem Moment von einer stabilen Sollposition ab, beispielsweise durch externe Vibration und/oder durch Nachschwingen in Folge einer Ansteuerung, kann das Sensorsignal dies erfassen und der Anwender kann eine gewünschte Reaktion auslösen.

Auch bei einem sehr geringen Leckstrom kann sich eine elektrische Drift bei einem piezoelektrischen Sensor über einen längeren Zeitraum ansammeln. Um die Messung der Position zuverlässig über eine lange Betriebsdauer zu gewährleisten, kann eine Rekalibrierung des Ladungszustands dadurch erreicht werden, dass der piezoelektrische Sensor in angemessenen Zeitintervallen vollständig entladen wird. Dieser Ladungszustand kann einer Nullposition entsprechen, nach der die Position des Auslenkelements bemessen wird. Alternativ kann mit Hilfe einer elektrischen oder elektronischen Vorrichtung auch ein beliebiger anderer Ladungszustand durch kurzzeitiges Anlegen einer Referenzspannung erzeugt und als Referenzposition verwendet werden. In einer der Ausführungsformen wird ein piezoelektrischer Aktuator gleichermaßen als Sensor verwendet. Der Vorgang der Rekalibrierung kann dann implizit in der Ansteuerung enthalten sein, da diese dem Sensor/Aktuator stets einen definierten Ladungszustand zuweist. Zur Durchführung einer Messung, d.h. zur Verwendung des Aktuators als Sensor, kann kurzzeitig die Anregungsspannung hochohmig abgeschaltet werden, sodass die Messung einer Sensorspannung ermöglicht wird. Je nach Anwendung kann dieser Vorgang stattfinden, wenn ein statischer Zustand des Aktuators erwünscht ist, so dass der Betrieb des mikromechanischen Bauteils nicht gestört wird.

Die Umschalteinheit kann ausgebildet sein, zwischen dem Sensorbetrieb und dem Aktuatorbetrieb periodisch umzuschalten.

Dies ermöglicht eine besonders genaue Positionsbestimmung des Auslenkelementes. Eine Periodenlänge der periodischen Umschaltung kann im Bereich von einigen Sekunden, insbesondere im Bereich von einigen Mikrosekunden liegen. In anderen Ausführungsformen liegt eine Periodenlänge der periodischen Umschaltung im Bereich von einigen Minuten. Alternativ kann zwischen einem Sensorbetrieb und einem Aktuatorbetrieb nicht-periodisch umgeschaltet werden.

Das Auslenkelement kann ausgebildet sein, einfallendes Licht zu reflektieren und/oder zu brechen und/oder zu beugen.

Das Auslenkelement kann um mindestens zwei Rotationsachsen des Auslenkelements drehbar ausgebildet sein.

Dabei können die Aktuatoren symmetrisch um mindestens eine Rotationsachse des Auslenkelements angeordnet sein. Ferner können die Sensoren symmetrisch zu mindestens einer Rotationsachse des Auslenkelements angeordnet sein, insbesondere symmetrisch zu einem Schwerpunkt des Auslenkelements bzw. zu einem Schnittpunkt zwischen der Rotationsachse des Auslenkelements und einer Aktuatorebene.

In weiteren Ausführungsformen kann ein Schwingungszustand des beweglichen Auslenkelements über einen oszillierenden Spannungswert und/oder einen oszillierenden Stromwert des Sensorsignals bestimmt werden. Ferner kann eine mittlere Position des beweglichen Auslenkelements über eine mittlere Spannungsamplitude des Sensorsignals und/oder durch integrierende Messung der Stromamplitude ermittelt werden. Weiterhin kann eine Selbstentladung des Sensors über einen Abfall der mittleren Spannungsamplitude und/oder einen Abfall der mittleren Stromamplitude des Sensorsignals bestimmt werden.

Dies ermöglicht eine besonders genaue Positionsbestimmung des Auslenkelementes. Das Sensorsignal kann dabei durch eine Verzerrung des piezoelektrischen Materials des Sensors erzeugt werden.

Wenn das bewegliche Auslenkelement eine Auslenkung erfährt und anschließend aufgrund der Selbstentladung zu einer Ursprungsposition zurückkehrt, kann das Sensorsignal des Sensors hauptsächlich vier Phasen aufweisen: Eine Anstiegsphase; eine oszillierende Phase, deren Dauer von der Systemdämpfung abhängt; eine Abklingphase, deren (negative) Steigung von den Leckströmen abhängig ist; sowie eine Abstiegsphase, in der das Auslenkelement in die Ursprungsposition zurückkehrt. Ein zeitlicher Verlauf des Sensorsignals hängt insbesondere davon ab, wie stark die Eigenschwingung der Struktur angeregt und gedämpft wird und wie schnell sich die Ladung des piezoelektrischen Materials abbaut (d.h. von der Halbwertzeit des piezoelektrischen Materials). Als Systemreaktion kann beispielsweise eine Positionskorrektur erfolgen und/oder eine Aussage über die Positionsgenauigkeit gemacht werden.

In weiteren Ausführungsformen kann das mikromechanische Bauteil vier Haltevorrichtungen aufweisen. Dabei kann eine erste Haltevorrichtung eine erste Feder und ein erstes Aufhängungselement aufweisen und die erste Feder und das Auslenkelement können über eine erste Verbindungsstelle verbunden sein. Eine zweite Haltevorrichtung kann eine zweite Feder und ein zweites Aufhängungselement aufweisen und die zweite Feder und das Auslenkelement können über eine zweite Verbindungsstelle verbunden sein. Eine dritte Haltevorrichtung kann eine dritte Feder und ein drittes Aufhängungselement aufweisen und die dritte Feder und das Auslenkelement können über eine dritte Verbindungsstelle verbunden sein. Eine vierte Haltevorrichtung kann eine vierte Feder und ein viertes Aufhängungselement aufweisen und die vierte Feder und das Auslenkelement können über eine vierte Verbindungsstelle verbunden sein. Die ersten bis vierten Federn und/oder Aufhängungselemente und/oder Verbindungsstellen können in einer Ruhelage in einer Ebene mit dem Auslenkelement liegen und jeweils zwei der Federn und/oder Aufhängungselemente und/oder Verbindungsstellen können symmetrisch zu einer Achse orthogonal zu einer Symmetrieachse des Auslenkelements angeordnet sein.

Die vier Federn und/oder Aufhängungselemente und/oder Verbindungsstellen können symmetrisch zu einem Schwerpunkt des Auslenkelements bzw. zu einem Schnittpunkt zwischen der Symmetrieachse des Auslenkelements und der Aktuatorebene sein. Bei Ausführungsbeispielen können die Sensoren mit dem Auslenkelement derart verbunden sein, dass sich die Sensoren mit dem Auslenkelement mitbewegen. Mit anderen Worten, die Sensoren können derart mit dem Auslenkelement verbunden sein, dass sie die durch die hervorgerufene Bewegung bzw. Verformung bzw. Krümmung des Auslenkungselements mitmachen. Bei Ausführungsbeispielen können die Federn symmetrisch zwischen den Aktuatoren angeordnet sein. Die vier Sensoren können jeweils mit den vier Federn verbunden sein, um sich mit den Federn mitzubewegen.

Die jeweils eine Feder und das jeweils eine Aufhängungselement können in einer Ruhelage in einer Ebene liegen, die nicht mit einer Ebene des Auslenkelementes zusammenfällt. Alternativ kann das Auslenkelement in der Ebene der jeweils einen Feder und des jeweils einen Aufhängungselement zumindest verankert und/oder gelagert sein, sich jedoch über diese Ebene hinaus erstrecken, insbesondere orthogonal zu dieser Ebene.

Auf diese Weise kann das mikromechanische Bauteil besonders kompakt gestaltet werden und ferner kann mit den Aktuatoren eine große Auslenkung des Auslenkelementes erreichbar werden. Das Auslenkelement kann dabei über eine Haltestruktur mit den Federn der Haltevorrichtung mechanisch verbunden sein. Die Haltestruktur kann zylinderförmig ausgebildet sein. Ein Durchmesser der zylinderförmigen Haltestruktur kann kleiner sein als eine Fläche des Auslenkelementes. Eine Rotationsachse der zylinderförmigen Haltestruktur kann mit einem Schwerpunkt und/oder einem Mittelpunkt des Auslenkelementes zusammenfallen. Die Haltestruktur kann auf einer Seite über zumindest eine Verbindungsstelle mit dem Auslenkelement direkt verbunden sein. Auf einer anderen Seite kann die Haltestruktur mit einer Plattform direkt verbunden sein. Die Plattform kann direkt mit den Federn verbunden sein.

Ein Verfahren zum Betreiben eines mikromechanischen Bauteils kann die folgenden Schritte umfassen: Erfassen eines Sensorsignals in Form einer elektrischen Polarisation und/oder eines von der elektrischen Polarisation hervorgerufenen Stromflusses, wobei die elektrische Polarisation durch eine Verformung des mindestens einen Aufhängungselements verursacht wird; und Bestimmen der Position und/oder Positionsänderung des Auslenkelements unter Verwendung des Sensorsignals.

Ein Schwingungszustand des beweglichen Auslenkelements kann über einen oszillierenden Spannungswert und/oder einen oszillierenden Stromwert des von den Sensoren erfassten Sensorsignals bestimmt werden. Ferner kann eine mittlere Position des beweglichen Auslenkelements über eine mittlere Spannungsamplitude ermittelt werden (siehe oben). Auf Basis der durch das Sensorsignal bestimmten Position kann eine Anpassung der Position des Auslenkelements unter Verwendung der Aktuatoren durchgeführt werden.

Das Verfahren zum Betreiben eines mikromechanischen Bauteils kann weiterhin folgenden Schritt umfassen: Anregung einer resonanten, quasistatischen und/oder nicht-resonant periodischen Bewegung des Auslenkelements durch elektrische Anregung des mindestens einen Aktuators.

Ausführungsbeispiele der Erfindung werden nachfolgend anhand der Figuren erläutert. Dabei zeigen, jeweils schematisch,
- Figur 1: eine schematische Draufsicht eines mikromechanischen Bauteils eines ersten Ausführungsbeispiels mit vier Haltevorrichtungen,
- Figur 2: eine schematische Draufsicht eines mikromechanischen Bauteils eines zweiten Ausführungsbeispiels mit vier Haltevorrichtungen,
- Figur 3: eine schematische Draufsicht eines mikromechanischen Bauteils eines dritten Ausführungsbeispiels mit vier Haltevorrichtungen, bei der jede Haltevorrichtung einen Aktuator und einen davon räumlich getrennten Sensor umfasst,
- Figur 4: eine schematische Draufsicht auf ein mikromechanisches Bauteil eines vierten Ausführungsbeispiels mit vier Haltevorrichtungen, bei der jede Haltevorrichtung einen Aktuator und einen davon räumlich getrennten Sensor umfasst,
- Figur 5: eine schematische Ansicht eines mikromechanischen Bauteils eines fünften Ausführungsbeispiels mit vier Haltevorrichtungen, bei der die Haltevorrichtungen in einer Ruhelage in einer Ebene liegen, die nicht mit einer Ebene eines Auslenkelementes zusammenfällt,
- Figur 6: eine schematische Darstellung der unterschiedlichen Phasen eines piezoelektrischen Sensorsignals aufgrund einer Auslenkung eines Auslenkelementes, und
- Figur 7: eine zu Figur 5 vergleichbare Ansicht eines mikromechanischen Bauteils eines sechsten Ausführungsbeispiels.

Wiederkehrende und ähnliche Merkmale verschiedener Ausführungsformen sind in den Figuren mit identischen oder ähnlichen alphanumerischen Bezugszeichen versehen.

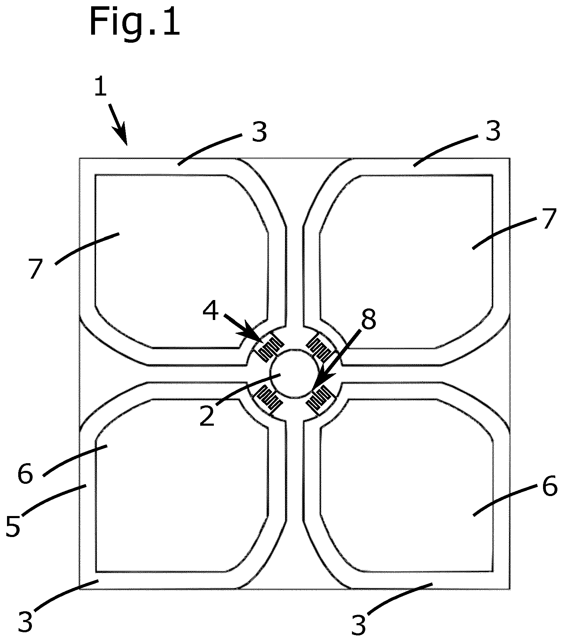

Figur 1 zeigt eine schematische Draufsicht eines ersten Ausführungsbeispiels eines mikromechanischen Bauteils 1.

Das mikromechanische Bauteil 1 umfasst vier Haltevorrichtungen 3. Dabei weist eine erste Haltevorrichtung 3 eine erste Feder 4 und ein erstes Aufhängungselement 5 auf und die erste Feder 4 und ein Auslenkelement 2 sind über eine erste Verbindungsstelle 8 verbunden. Eine zweite Haltevorrichtung 3 umfasst eine zweite Feder 4 und ein zweites Aufhängungselement 5 und die zweite Feder 4 und das Auslenkelement 2 sind über eine zweite Verbindungsstelle 8 verbunden. Eine dritte Haltevorrichtung 3 weist eine dritte Feder 4 und ein drittes Aufhängungselement 5 auf und die dritte Feder 4 und das Auslenkelement 2 sind über eine dritte Verbindungsstelle 8 verbunden. Eine vierte Haltevorrichtung 3 umfasst eine vierte Feder 4 und ein viertes Aufhängungselement 5 und die vierte Feder 4 und das Auslenkelement 2 sind über eine vierte Verbindungsstelle 8 verbunden. Die vier Federn 4 und die vier Aufhängungselemente 5 und die vier Verbindungsstellen 8 liegen in einer Ruhelage in einer Ebene mit dem Auslenkelement 2 und jeweils zwei der Federn 4 und Aufhängungselemente 5 und Verbindungsstellen 8 sind symmetrisch zu einer Achse orthogonal zu einer Symmetrieachse (wobei die Symmetrieachse senkrecht zu einer Ebene des Auslenkelementes liegt) des Auslenkelements 2 angeordnet.

Die vier Haltevorrichtungen 3 sind innerhalb des Bauteils 1 ausschließlich über das Auslenkelement 2 miteinander verbunden und an zwei Aufhängungselemente 5 sind zwei Sensoren 6 angeordnet, die ausgebildet sind, ein direkt von der Auslenkung des beweglichen Auslenkelements 2 abhängiges Sensorsignal zu erzeugen. Der Sensor 6 ist ein piezoelektrischer Sensor. Der Sensor 6 ist derart angeordnet, dass er sich auf Grund der Auslenkung des Auslenkelementes 2 verformt. Jeder Sensor 6 umfasst einen Stapel aus einer ersten Elektrodenschicht (z. B. Titan und/oder Platin), einer piezoelektrischen Schicht (z. B. einer Blei-Zirkonat-Titanat-Schicht) und einer zweiten Elektrodenschicht (z. B. Chrom und/oder Gold).

Die zwei anderen Aufhängungselement 5 umfassen zwei Aktuatoren 7, die ausgebildet sind, bei elektrischer Ansteuerung eine Auslenkung des Auslenkelements 2 hervorzurufen. Die Aktuatoren 7 sind als piezoelektrische Aktuatoren 7 ausgebildet. Jeder Sensor 6 ist von allen Aktuatoren 7 vollständig galvanisch getrennt. Die Auslenkung des Auslenkelementes 2 wird durch die jeweils eine Feder 4 auf den jeweiligen Sensor 6 übertragen.

Als Material für eine piezoelektrische Schicht des piezoelektrischen Aktuators 7 kann das piezoelektrische Material Blei-Zirkonat-Titanat verwendet werden. Jeder Aktuator 7 umfasst zwei Elektroden. Der Aktuator 7 ist eingerichtet, das Auslenkelement 2 3-dimensional auszulenken und eine Auslenkung des Auslenkelementes 2 über die jeweils eine Feder 4 hervorzurufen.

Die Verbindungsstellen 8 in Figur 1 sind punktförmig dargestellt. Gleichwohl besitzen die Verbindungsstellen 8 des mikromechanischen Bauteils eine gewisse Ausdehnung. Die Sensoren 6 sind mit dem Auslenkelement 2 derart verbunden, dass sich die Sensoren 6 mit dem Auslenkelement 2 mitbewegen.

Indem die mindestens zwei Haltevorrichtungen 3 ausschließlich über das Auslenkelement 2 miteinander verbunden sind und an mindestens einem Aufhängungselement 5 ein Sensor 6 angeordnet ist, können unter Verwendung des Sensors 6 eine Position und/oder eine Positionsänderung des Auslenkelementes 2 direkt bestimmt werden.

Wie oben ausgegeben, führt das Auslenkelement 2 des mikromechanischen Bauteils 1 eine 3-dimensionale Bewegung aus und wird in zwei Neigungsrichtungen und in einer zusätzlichen Hubbewegung ausgelenkt. Das Auslenkelement 2 ist als ein Mikrospiegel ausgebildet. Der Mikrospiegel umfasst eine lichtreflektierende Spiegelschicht.

Die vier Haltevorrichtungen 3 befinden sich im Ruhezustand in einer Ebene. Als eine Möglichkeit können die Haltevorrichtungen als Membran hergestellt und durch Ätzen strukturiert sein. Jede Feder 4 verbindet ein Aufhängungselement 5 mit dem Auslenkelement 2. Jede Feder 4 ist zwischen einem Aufhängungselement 5 und dem Auslenkelement 2 angeordnet.

Der Sensor 6 und der Aktuator 7 verhalten sich in einem Betrieb hysteresefrei. Der Sensor 6 und der Aktuator 7 bestehen insbesondere aus piezoelektrischen Materialen mit linearem Betriebsverhalten (beispielsweise AlN oder AlScN), die insbesondere einem Ladungszustand des piezoelektrischen Materials eindeutig einen Deformationszustand des piezoelektrischen Materials zuordnen. Durch die Eindeutigkeit des Deformationszustands des piezoelektrischen Materials kann die Position des Auslenkelementes 2 eindeutig bestimmt werden.

Weiterhin weist in einem Betrieb eine Speicherung elektrischer Ladung des Sensors 6 ohne extrinsische Einflüsse eine Halbwertszeit von mehr als einer Minute auf. Durch eine hohe Halbwertszeit wird ein piezoelektrischer Sensor 6 zur Detektion von zeitlichen Änderungen des Deformationszustands des mikromechanischen Bauteils 1 eingesetzt, indem hauptsächlich der elektrische Stromfluss zwischen den Elektroden gemessen wird.

Weiterhin wird ein weiterer piezoelektrischer Sensor 6 zur Detektion des aktuellen mechanischen Zustands des mikromechanischen Bauteils 1 eingesetzt, indem hauptsächlich die elektrische Spannung über die Elektroden gemessen wird. Dies setzt voraus, dass die Selbstentladung sehr gering ist. Dadurch wird eine elektrische Ladung des Sensors 6 über einen längeren Zeitraum gehalten, um ein hinreichend akkurates Signal über die aktuelle Position zu erzeugen, selbst wenn diese für einen gewissen Zeitraum unverändert bleibt.

Das mikromechanische Bauteil 1 umfasst eine Auswerteeinheit (nicht gezeigt), die eingerichtet ist, das Sensorsignal auszuwerten und eine momentane Position und/oder Positionsänderung des Auslenkelements 2 zu bestimmen. Die Auswerteeinheit bestimmt über eine oszillierende Phase (einen oszillierenden Spannungswert) des Sensorsignals einen Schwingungszustand des beweglichen Auslenkelements 2 und über eine mittlere Spannungsamplitude des Sensorsignals eine mittlere Position des beweglichen Auslenkelements 2. Die momentane Position und/oder Positionsänderung kann aus einer resonanten, quasistatischen und/oder nicht-resonant periodischen Bewegung des Auslenkelements 2 resultieren. Das Bestimmen der momentanen Position und/oder Positionsänderung durch die Auswerteeinheit erfolgt analog für eine resonante, quasistatische und/oder nicht-resonant periodische Bewegung des Auslenkelements 2. Durch die hohe Halbwertzeit des piezoelektrischen Materials des piezoelektrischen Sensors 6 wird eine absolute Position des Auslenkelementes 2 im resonanten Betrieb direkt bestimmt.

In Figur 1 ist entweder ein Aktuator 7 oder sein Sensor 6 auf einem Aufhängungselement 5 angeordnet. Die zwei Sensoren 6 und die zwei Aktuatoren 7 befinden sich auf einer (diagonalen) Linie mit dem Auslenkelement. Die zwei Aktuatoren 7 und die zwei Sensoren 6 sind symmetrisch um mindestens eine Rotationsachse des Auslenkelements 2 angeordnet und insbesondere symmetrisch zu einem Schwerpunkt des Auslenkelements 2 bzw. zu einem Schnittpunkt zwischen der Rotationsachse des Auslenkelements und einer Aktuatorebene angeordnet.

Werden nur drei Aktuatoren verwendet ist eine reine Hubbewegung des Auslenkelements 2 ohne zusätzliche rotatorische Komponente ausgeschlossen. Mit anderen Worten, solange ein piezoelektrisches Element als Sensor 6 und nicht als Aktuator 7 verwendet wird, ist eine Hubbewegung des Auslenkelements 2 ausgeschlossen. Das Auslenkelement 2 kann - in diesem Fall - nur geneigt werden und das mikromechanische Bauteil kann nur als 2D-Scanner verwendet werden.

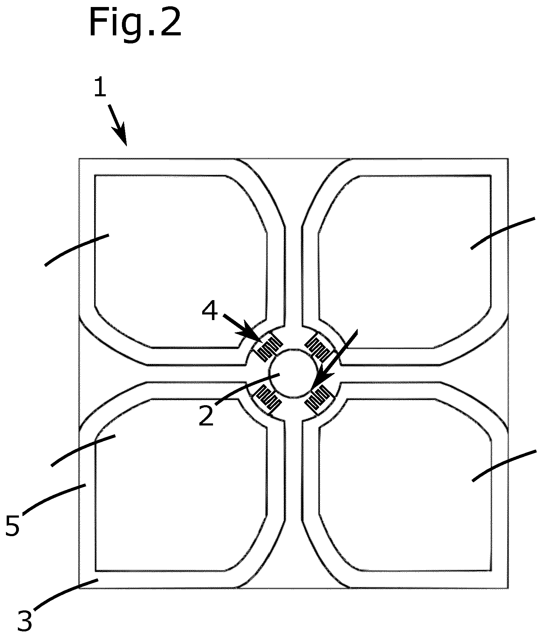

In Figur 2 ist eine weitere Ausführungsform eines mikromechanischen Bauteiles gezeigt. In Figur 2 ist jedes Aufhängungselement 5 mit einem piezoelektrischen Element versehen, das sowohl als Sensor 6 als auch als Aktuator 7 verwendbar ist. Ferner umfasst das mikromechanische Bauteil 1 eine Umschalteinheit (nicht gezeigt), die ausgebildet ist, zwischen einem Sensorbetrieb und einem Aktuatorbetrieb des piezoelektrischen Elementes umzuschalten.

Das mikromechanische Bauteil aus Figur 2 umfasst sowohl vier Aktuatoren 7 als auch vier Sensoren 6. Ein gleichphasiges Ansteuern aller vier Aktuatoren 7 resultiert in einer Hubbewegung, d.h. der Anwendungsbereich wird auf einen 3D-Scanner erweitert. Ein piezoelektrisches Element kann zu einer bestimmten Zeit entweder als Sensor 6 oder als Aktuator 7 verwendet werden. Bei einer Ansteuerung aller vier Aktuatoren 7 kann nicht die Position des Auslenkelementes 2 bestimmt werden, da kein Sensorsignal durch einen Sensor 6 bereits gestellt werden kann.

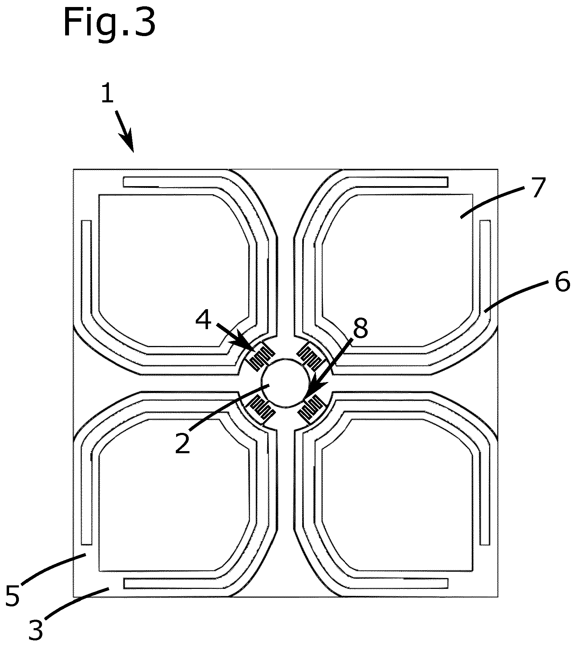

Figur 3 zeigt eine Ausführungsform eines mikromechanischen Bauteils 1, bei der jedes Aufhängungselement 5 sowohl einen Sensor 6 als auch einen Aktuator 7 aufweist. Die Sensoren 6 sind - in einer Draufsicht - strangförmig ausgebildet und umschließen teilweise die Aktuatoren 7.

In dieser Ausführungsform können zeitgleich bis zu vier Aktuatoren und bis zu vier Sensoren angesteuert werden. Jeder Aktuator 7 ist größer ausgebildet als jeder - auf demselben Aufhängungselement angeordnete - Sensor 6. Die Sensoren 6 sind so positioniert, dass sie bei einer Auslenkung des Auslenkungselementes eine hohe Biegung erfahren.

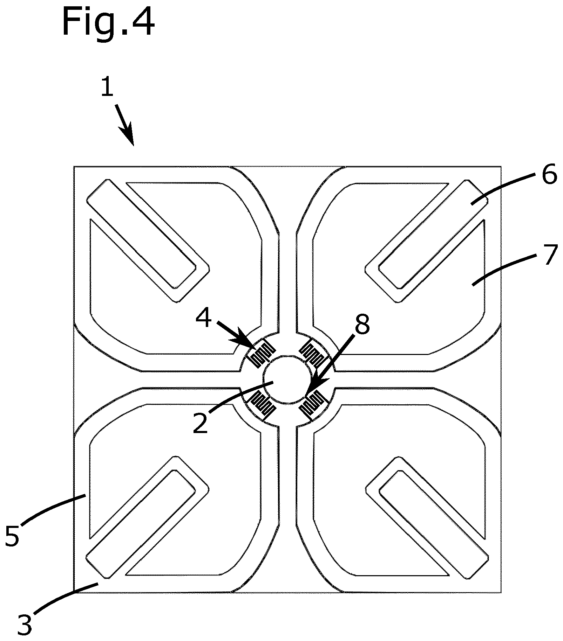

Figur 4 zeigt eine zu Figur 3 ähnliche Ausführungsform eines mikromechanischen Bauteils 1, bei der jedes Aufhängungselement 5 sowohl einen Sensor 6 als auch einen Aktuator 7 aufweist. Die Sensoren 6 sind jedoch - in einer Draufsicht - balkenförmig ausgebildet und die Aktuatoren 7 umschließen teilweise die Sensoren 6.

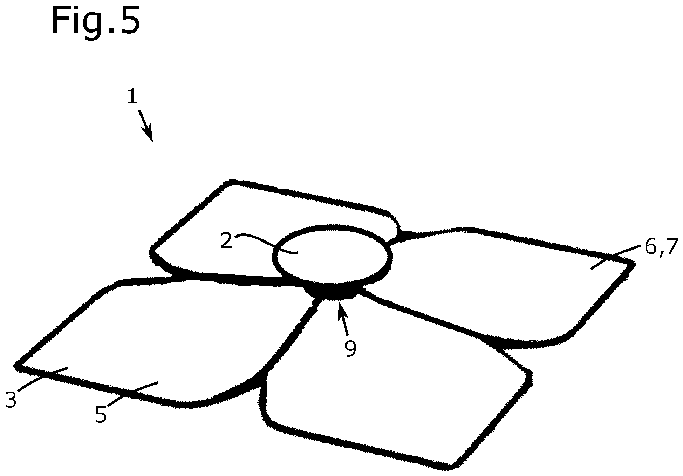

Figur 5 zeigt eine weitere Ausführungsform eines mikromechanischen Bauteils. Dabei liegen die vier Aufhängungselemente 5 in einer Ruhelage in einer Ebene, die nicht mit einer Ebene des Auslenkelementes 2 zusammenfällt.

Das Auslenkelement 2 ist dabei über eine lediglich angedeutete Haltestruktur 9 mit den vier Haltevorrichtungen 3 mechanisch verbunden. Die Haltestruktur 9 ist zylinderförmig ausgebildet. Ein Durchmesser der zylinderförmigen Haltestruktur 9 ist kleiner als eine Fläche des Auslenkelementes 2. Eine Rotationsachse der zylinderförmigen Haltestruktur 9 fällt mit einem Schwerpunkt und einem Mittelpunkt des Auslenkelementes 2 zusammen. Die Haltestruktur 9 ist auf einer Oberseite über eine Verbindungsstelle mit dem Auslenkelement 2 direkt verbunden. Auf einer Unterseite ist die Haltestruktur 9 mit einer Plattform (nicht gezeigt) direkt verbunden. Die Plattform ist direkt mit den vier Haltevorrichtungen 3 verbunden.

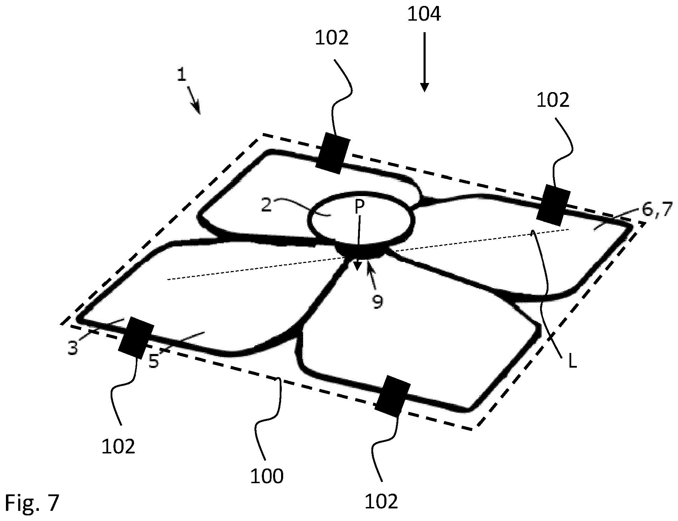

In einer zu den Figuren 1-4 analogen Draufsicht von Fig. 5 liegt das Auslenkelement 2 wiederum auf einer (insbesondere diagonalen) Linie mit wenigstens einem Sensor 6 und Aktuator 7 und in dem gezeigten Beispiel auf einer Linie mit jeweils zwei Sensoren 6 und Aktuatoren 7. Dies wird nachstehend anhand von Fig. 7 noch näher erläutert.

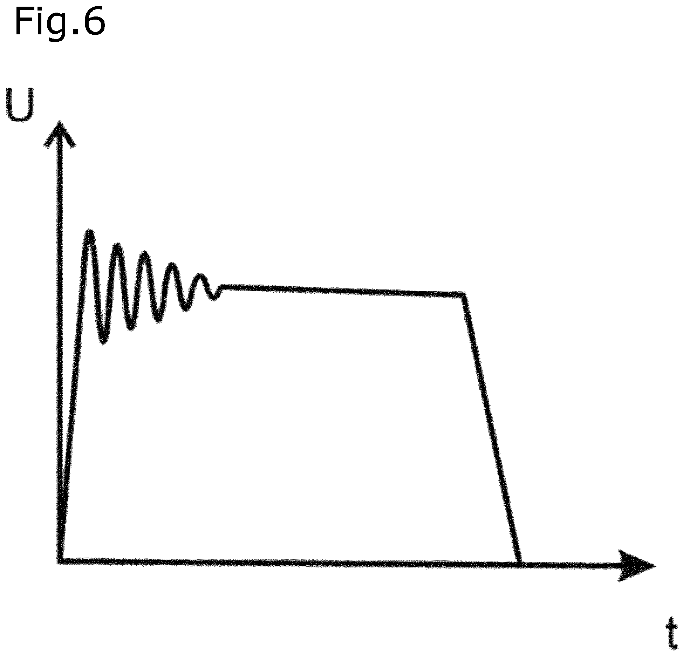

Die Figur 6 zeigt eine schematische Darstellung unterschiedlicher Phasen eines piezoelektrischen Sensorsignals aufgrund einer Auslenkung eines Auslenkelementes eines mikromechanischen Bauteils. Dabei ist ein Fall dargestellt, in dem eine Eigenschwingung des mikromechanischen Bauteils im Vergleich zur Selbstentladung der Sensoren 6 und/oder Aktuatoren 7 schnell abklingt.

Wenn das bewegliche Auslenkelement 2 eine Auslenkung erfährt und anschließend zu einer Ursprungsposition zurückkehrt, weist das Sensorsignal des Sensors 6 hauptsächlich vier Phasen auf: Eine Anstiegsphase; eine oszillierende Phase, deren Dauer von der Systemdämpfung abhängt; eine Abklingphase, deren (negative) Steigung von den Leckströmen abhängig ist; sowie eine Abstiegsphase, in der das Auslenkelement 2 in die Ursprungsposition zurückkehrt.

Ein Schwingungszustand des beweglichen Auslenkelements 2 wird über die oszillierende Phase (den oszillierenden Spannungswert) des Sensorsignals bestimmt. Ferner wird eine mittlere Position des beweglichen Auslenkelements 2 über eine mittlere Spannungsamplitude des Sensorsignals ermittelt. Weiterhin wird eine Selbstentladung des Sensors 6 über einen Abfall der mittleren Spannungsamplitude des Sensorsignals bestimmt.

Ein Verfahren zum Betreiben eines mikromechanischen Bauteils 1 umfasst die folgenden Schritte: Anregung einer resonanten, quasistatischen und/oder nicht-resonant periodischen Bewegung des Auslenkelements 2 durch elektrische Anregung der Aktuatoren 7; Erfassen eines Sensorsignals in Form einer elektrischen Polarisation und/oder eines von der elektrischen Polarisation hervorgerufenen Stromflusses, wobei die elektrische Polarisation durch eine Verformung der Aufhängungselements 5 verursacht wird; und Bestimmen der Position des Auslenkelements 2 unter Verwendung des Sensorsignals.

Die elektrische Anregung der Aktuatoren 7 erfolgt durch eine Steuereinheit (nicht gezeigt). Die Steuereinheit kann Informationen über Eigenschwingungen des mikromechanischen Bauteils 1 berücksichtigen, um die Aktuatoren 7 elektrisch so anzusteuern, dass das Auslenkelement 2 eine resonante, quasistatische und/oder nicht-resonant periodische Bewegung ausführt.

Das Bestimmen der Position des Auslenkelements 2 erfolgt durch die Auswerteeinheit (nicht gezeigt). Die Auswerteeinheit bestimmt über die oszillierende Phase (den oszillierenden Spannungswert) des Sensorsignals einen Schwingungszustand des beweglichen Auslenkelements 2 und über eine mittlere Spannungsamplitude des Sensorsignals eine mittlere Position des beweglichen Auslenkelements 2.

Figur 7 zeigt eine zu Figur 5 vergleichbare Ansicht eines mikromechanischen Bauteils 1 gemäß einem sechsten Ausführungsbeispiel. Zusätzlich zu dem Ausführungsbeispiel der Figur 5 ist in diesem Fall eine Komponente 100 gezeigt, an der die Haltevorrichtungen 3 jeweils mechanisch starr gelagert sind. Lediglich beispielhaft sind hierfür vier Lagerpunkte 102 gezeigt (ein Lagerpunkt 102 je Haltevorrichtung 3). Es könne jedoch auch mehr Lagerpunkte 102 vorgesehen sein oder kontinuierliche Verbindungen (z.B. Kleb- oder Lötverbindungen) der Außenränder der Haltevorrichtungen 3 mit einem jeweils gegenüberliegenden Abschnitt der Komponente 100. Die Komponente 100, die lediglich beispielhaft als einteiliger Rahmen dargestellt ist, kann Teil einer übergeordneten Anordnung 104 sein, die das mikromechanische Bauteil 1 umfasst.

Aus Fig. 7 wird somit ersichtlich, dass die Haltevorrichtungen 3 innerhalb des mikromechanischen Bauteils 1 ausschließlich über das Auslenkelement 2 miteinander gekoppelt und somit indirekt mechanisch verbunden sind. Infolge eines Einbaus in die übergeordnete Anordnung 104 und dabei vorgenommenen Verankerung an der Komponente 100 sind die Haltevorrichtungen 3 auch über die Komponente 100 miteinander verbunden. Diese wiederum nur indirekte Verbindung erfolgt jedoch außerhalb des mikromechanischen Bauteils 1 mittels der bauteilexternen Komponente 100. Eine direkte Verbindung der Haltevorrichtungen 3 untereinander liegt weder bauteilintern, noch bauteilextern vor.

In Fig. 7 ist ferner lediglich beispielhaft eine diagonale Linie L gezeigt, die wiederum lediglich beispielhaft zwei der Haltevorrichtungen 3 sowie hiervon umfasste Sensoren 6 und Aktuatoren 7 verbindet. Diese Line L verläuft in einer Ebene, die den dargestellten Umriss der bauteilexternen Komponente 100 umfasst. Folglich verlaufen auch die verankerten bzw. über die Lagerpunkte 102 gelagerten Außenränder der Haltevorrichtungen 3 in dieser Ebene, wobei diese Außenränder jeweils von dem Auslenkelement 2 abgewandt sind.

Mit einem Pfeil P ist angedeutet, dass auch das Auslenkelement 2 in einer Draufsicht analog zu den Figuren 1-4 sowie bei einer Projektion in die vorstehend geschilderte Ebene ebenfalls auf der Linie L liegt.

Somit verdeutlicht sich, dass trotz einer Anordnung von Auslenkelement 2 in einer anderen Ebene als wenigstens einer der Sensoren 6 und Aktuatoren 7, diese Bauteile zumindest bei einer Draufsicht oder Projektion in eine gemeinsame Ebene auf einer Linie L liegen.

Alternativ kann ein Verankerungspunkt des Auslenkelements 2 bei dem Pfeil 9 aus Fig. 7 positioniert sein. Zumindest dieser Verankerungspunkt kann in derselben Ebene wie die Haltevorrichtungen 3 und/oder die Sensoren 6 und Aktuatoren 7 liegen. Die Linie L kann folglich zumindest diesen Verankerungspunkt des Auslenkelements 2 sowie die Sensoren 6 und Aktuatoren 7 schneiden, so dass diese Bauteile auch unabhängig von einer etwaigen Projektion in eine gemeinsame Ebene auf einer gemeinsamen Linie L liegen.

Ohne dass in den Figuren 1-4 vergleichbare Linien L eingetragen sind, ist ersichtlich, dass eine solche Linie bei den Figuren 1, 2 und 4 derart definierbar wäre, dass sie jeweils Flächenschwerpunkte der Sensoren 6 und Aktuatoren 7 schneidet und im Fall von Fig. 3 eine Spiegelsymmetrieachse der Sensoren 6 bildet.

## Patentansprüche

1. Mikromechanisches Bauteil (1) mit einem beweglichen Auslenkelement (2) und mindestens zwei das bewegliche Auslenkelement (2) tragenden Haltevorrichtungen (3), die jeweils eine Feder (4) und jeweils ein Aufhängungselement (5) umfassen, wobei die jeweils eine Feder (4) und das bewegliche Auslenkelement (2) miteinander verbunden sind,
die mindestens zwei Haltevorrichtungen (3) ausschließlich über das Auslenkelement (2) miteinander verbunden sind und keine direkte Verbindung der Haltevorrichtungen (3) untereinander vorliegt,
und an mindestens einem Aufhängungselement (5) ein Sensor (6) angeordnet ist, der ausgebildet ist, ein direkt von der Auslenkung des beweglichen Auslenkelements (2) abhängiges Sensorsignal zu erzeugen, wobei mindestens ein Aufhängungselement (5) einen Aktuator (7) umfasst, der ausgebildet ist, bei elektrischer Ansteuerung eine Auslenkung des Auslenkelements (2) hervorzurufen, und **gekennzeichnet dadurch, dass**:
a) der Sensor (6) und der Aktuator (7) auf einer Linie mit dem Auslenkelement (2) angeordnet sind, wobei entweder ein Aktuator (7) oder ein Sensor (6) auf einem jeweiligen Aufhängungselement (5) angeordnet ist ; oder
b) das Aufhängungselement (5) sowohl einen Sensor (6) als auch einen Aktuator (7) aufweist, wobei die Sensoren (6) strangförmig ausgebildet sind und die Aktuatoren (7) teilweise umschließen und/oder wobei die Sensoren (6) balkenförmig ausgebildet sind und die Aktuatoren (7) die Sensoren (6) teilweise umschließen.

2. Mikromechanisches Bauteil (1) nach Anspruch 1, wobei der mindestens eine Sensor (6) von dem zumindest einen Aktuator (7) vollständig galvanisch getrennt ist.

3. Mikromechanisches Bauteil (1) nach einem der vorangehenden Ansprüche, wobei der Sensor (6) ein piezoelektrischer Sensor (6) oder ein piezoresistiver Sensor (6) ist.

4. Mikromechanisches Bauteil (1) nach einem der vorangehenden Ansprüche, wobei die jeweils eine Feder (4) das jeweils eine Aufhängungselement (5) mit dem Auslenkelement (2) verbindet und die Feder (4) zwischen dem jeweils einen Aufhängungselement (5) und dem Auslenkelement (2) angeordnet ist.

5. Mikromechanisches Bauteil (1) nach einem der vorangehenden Ansprüche, wobei der Sensor (6) und/oder der Aktuator (7) sich in einem Betrieb hysteresefrei verhalten und insbesondere aus piezoelektrischen Materialen mit linearem Betriebsverhalten bestehen, die insbesondere einem Ladungszustand des piezoelektrischen Materials eindeutig einen Deformationszustand des piezoelektrischen Materials zuordnet.

6. Mikromechanisches Bauteil (1) nach einem der vorangehenden Ansprüche, wobei eine Speicherung elektrischer Ladung des Sensors (6) ohne extrinsische Einflüsse eine Halbwertszeit von mehr als einer Minute, vorzugsweise mehr als fünf Minuten aufweist.

7. Mikromechanisches Bauteil (1) nach einem der vorangehenden Ansprüche, das eine Auswerteeinheit umfasst, die eingerichtet ist, das Sensorsignal auszuwerten und eine momentane Position und/oder Positionsänderung des Auslenkelements (2) zu bestimmen, wobei die momentane Position und/oder Positionsänderung aus einer resonanten, quasistatischen und/oder nicht-resonant periodischen Bewegung des Auslenkelements (2) resultiert.

8. Mikromechanisches Bauteil (1) nach einem der vorangehenden Ansprüche mit Variante b) von Anspruch 1, wobei der Aktuator (7) größer ist als der Sensor (6), insbesondere mehr als doppelt so groß, vorzugsweise etwa zehnmal so groß.

9. Mikromechanisches Bauteil (1) nach einem der vorangehenden Ansprüche mit Variante b) von Anspruch 1, wobei der Sensor (6) so positioniert ist, dass er bei einer Auslenkung des Auslenkelementes (2) eine hohe Biegung erfährt und/oder der Aktuator (7) und der Sensor (6) eine gemeinsame Symmetrieachse aufweisen.

10. Mikromechanisches Bauteil (1) nach einem der vorangehenden Ansprüche, wobei das Aufhängungselement (5) mit einem piezoelektrischen Element versehen ist, das sowohl als Sensor (6) als auch Aktuator (7) verwendbar ist und wobei das mikromechanische Bauteil eine Umschalteinheit umfasst, die ausgebildet ist, zwischen einem Sensorbetrieb und einem Aktuatorbetrieb des piezoelektrischen Elementes umzuschalten, insbesondere wobei die Umschalteinheit ausgebildet ist, zwischen dem Sensorbetrieb und dem Aktuatorbetrieb periodisch umzuschalten.

11. Mikromechanisches Bauteil (1) nach einem der vorangehenden Ansprüche, wobei das Auslenkelement (2) ausgebildet ist, einfallendes Licht zu reflektieren und/oder zu brechen und/oder zu beugen.

12. Mikromechanisches Bauteil (1) nach einem der vorangehenden Ansprüche, wobei das Auslenkelement (2) um mindestens zwei Rotationsachsen des Auslenkelements (2) drehbar ausgebildet ist.

13. Mikromechanisches Bauteil (1) nach einem der vorangehenden Ansprüche, wobei ein Schwingungszustand des beweglichen Auslenkelements (2) über einen oszillierenden Spannungswert und/oder einen oszillierenden Stromwert des Sensorsignals, eine mittlere Position des beweglichen Auslenkelements (2) über eine mittlere Spannungsamplitude und eine Selbstentladung des Sensors (6) über einen Abfall der mittleren Spannungsamplitude und/oder einen Abfall der mittleren Stromamplitude des Sensorsignals bestimmbar ist.

14. Mikromechanisches Bauteil (1) nach einem der vorangehenden Ansprüche, das vier Haltevorrichtungen (3) aufweist,
wobei eine erste Haltevorrichtung eine erste Feder (4) und ein erstes Aufhängungselement (5) aufweist und die erste Feder (4) und das Auslenkelement (2) über eine erste Verbindungsstelle (8) verbunden sind;
wobei eine zweite Haltevorrichtung (3) eine zweite Feder (4) und ein zweites Aufhängungselement (5) aufweist und die zweite Feder (4) und das Auslenkelement (2) über eine zweite Verbindungsstelle (8) verbunden sind;
wobei eine dritte Haltevorrichtung (3) eine dritte Feder (4) und ein drittes Aufhängungselement (5) aufweist und die dritte Feder (4) und das Auslenkelement (2) über eine dritte Verbindungsstelle (8) verbunden sind;
wobei eine vierte Haltevorrichtung (3) eine vierte Feder (4) und ein viertes Aufhängungselement (5) aufweist und die vierte Feder (4) und das Auslenkelement (2) über eine vierte Verbindungsstelle (8) verbunden sind;
wobei die ersten bis vierten Federn (4) und/oder Aufhängungselemente (5) und/oder Verbindungsstellen (8) in einer Ruhelage in einer Ebene mit dem Auslenkelement (2) liegen und jeweils zwei der Federn (4) und/oder Aufhängungselemente (5) und/oder Verbindungsstellen (8) symmetrisch zu einer Achse orthogonal zu einer Symmetrieachse des Auslenkelements (2) angeordnet sind.

15. Mikromechanisches Bauteil (1) nach einem der Ansprüche 1 bis 13, wobei die jeweils eine Feder (4) und das jeweils eine Aufhängungselement (5) in einer Ruhelage in einer Ebene liegen, die nicht mit einer Ebene des Auslenkelementes (2) zusammenfällt.

## Claims

1. A micromechanical component (1) comprising a movable deflection element (2) and at least two retaining devices (3) that support the movable deflection element (2), each of the retaining devices (3) comprisinga spring (4) and a suspension element (5), wherein the respective spring (4) and the movable deflection element (2) are connected to one another,
the at least two retaining devices (3) are connected to one another exclusively via the deflection element (2), and there is no direct connection between the retaining devices (3),
and a sensor (6) is arranged on at least one suspension element (5), which sensor is configured to generate a sensor signal that depends directly on the deflection of the movable deflection element (2), wherein at least one suspension element (5) comprises an actuator (7) that is configured to cause deflection of the deflection element (2) when electrically activated,
and **characterized in that**:
a) the sensor (6) and the actuator (7) are arranged in line with the deflection element (2), wherein either an actuator (7) or a sensor (6) is arranged on a respective suspension element (5); or
b) the suspension element (5) comprises both a sensor (6) and an actuator (7), wherein the sensors (6) are strand-shaped and partially enclose the actuators (7) and/or wherein the sensors (6) are beam-shaped and the actuators (7) partially enclose the sensors (6).

2. The micromechanical component (1) according to claim 1, wherein the at least one sensor (6) is completely galvanically isolated from the at least one actuator (7).

3. The micromechanical component (1) according to one of the preceding claims, wherein the sensor (6) is a piezoelectric sensor (6) or a piezoresistive sensor (6).

4. The micromechanical component (1) according to one of the preceding claims, wherein the respective spring (4) connects the respective suspension element (5) to the deflection element (2), and the spring (4) is arranged between the respective suspension element (5) and the deflection element (2).

5. The micromechanical component (1) according to one of the preceding claims, wherein the sensor (6) and/or the actuator (7) exhibit hysteresis-free behavior during operation and, in particular, consist of piezoelectric materials with linear operating behavior, which, in particular, unambiguously map a charge state of the piezoelectric material to a deformation state of the piezoelectric material.

6. The micromechanical component (1) according to one of the preceding claims, wherein the storage of electrical charge in the sensor (6), in the absence of extrinsic influences, has a half-life of more than one minute, preferably more than five minutes.

7. The micromechanical component (1) according to one of the preceding claims, comprising an evaluation unit configured to evaluate the sensor signal and determine a current position and/or change in position of the deflection element (2), wherein the current position and/or change in position results from a resonant, quasi-static, and/or non-resonant periodic motion of the deflection element (2).

8. The micromechanical component (1) according to one of the preceding claims, comprising variant b) of claim 1, wherein the actuator (7) is larger than the sensor (6)-in particular, more than twice as large, and preferably about ten times as large.

9. The micromechanical component (1) according to one of the preceding claims, comprising variant b) of claim 1, wherein the sensor (6) is positioned such that it undergoes significant bending when the deflection element (2) is deflected and/or the actuator (7) and the sensor (6) share a common axis of symmetry.

10. The micromechanical component (1) according to one of the preceding claims, wherein the suspension element (5) is provided with a piezoelectric element that can be used both as a sensor (6) and as an actuator (7), and wherein the micromechanical component comprises a switching unit configured to switch between sensor mode and actuator mode of the piezoelectric element, in particular wherein the switching unit is configured to switch periodically between sensor mode and actuator mode.

11. The micromechanical component (1) according to one of the preceding claims, wherein the deflection element (2) is configured to reflect and/or refract and/or diffract incident light.

12. The micromechanical component (1) according to one of the preceding claims, wherein the deflection element (2) is configured to be rotatable about at least two axes of rotation of the deflection element (2).

13. The micromechanical component (1) according to one of the preceding claims, wherein an oscillatory state of the movable deflection element (2) can be determined based on an oscillating voltage value and/or an oscillating current value of the sensor signal, and a mean position of the movable deflection element (2) can be determined via a mean voltage amplitude, and a self-discharge of the sensor (6) can be determined via a decrease in the mean voltage amplitude and/or a decrease in the mean current amplitude of the sensor signal.

14. The micromechanical component (1) according to one of the preceding claims, comprising four retaining devices (3),
wherein a first retaining device comprises a first spring (4) and a first suspension element (5), and the first spring (4) and the deflection element (2) are connected via a first connection point (8);
wherein a second retaining device (3) comprises a second spring (4) and a second suspension element (5), and the second spring (4) and the deflection element (2) are connected via a second connection point (8);
wherein a third retaining device (3) comprises a third spring (4) and a third suspension element (5), and the third spring (4) and the deflection element (2) are connected via a third connection point (8);
wherein a fourth retaining device (3) comprises a fourth spring (4) and a fourth suspension element (5), and the fourth spring (4) and the deflection element (2) are connected via a fourth connection point (8);
wherein the first through fourth springs (4) and/or suspension elements (5) and/or connection points (8) lie in the same plane as the deflection element (2) in a rest position, and respective pairs of the springs (4) and/or suspension elements (5) and/or connection points (8) are arranged symmetrically about an axis orthogonal to an axis of symmetry of the deflection element (2).

15. The micromechanical component (1) according to any one of claims 1 through 13, wherein the respective spring (4) and the respective suspension element (5) lie in a rest position in a plane that does not coincide with a plane of the deflection element (2).

## Revendications

1. Composant micromécanique (1) comprenant un élément de déviation mobile (2) et au moins deux dispositifs de retenue (3) qui supportent l'élément de déviation mobile (2) et comprennent respectivement un ressort (4) et un élément de suspension (5), dans lequel le ressort (4) respectif et l'élément de déviation mobile (2) sont reliés l'un à l'autre,
les au moins deux dispositifs de retenue (3) sont reliés entre eux exclusivement par l'intermédiaire de l'élément de déviation (2) et il n'y a pas de liaison directe entre les dispositifs de retenue (3),
et un capteur (6) conçu pour générer un signal de capteur directement dépendant de la déviation de l'élément de déviation mobile (2) est agencé au niveau d'au moins un élément de suspension (5), dans lequel au moins un élément de suspension (5) comprend un actionneur (7) conçu pour provoquer une déviation de l'élément de déviation (2) en cas d'excitation électrique,
et **caractérisé en ce que** :
a) le capteur (6) et l'actionneur (7) sont agencés sur une ligne comprenant l'élément de déviation (2), dans lequel un actionneur (7) ou un capteur (6) est agencé sur un élément de suspension (5) respectif ; ou
b) l'élément de suspension (5) présente à la fois un capteur (6) et un actionneur (7), dans lequel les capteurs (6) forment un écheveau et entourent partiellement les actionneurs (7) et/ou dans lequel les capteurs (6) forment une barre et les actionneurs (7) entourent partiellement les capteurs (6).

2. Composant micromécanique (1) selon la revendication 1, dans lequel le au moins un capteur (6) est complètement isolé galvaniquement du au moins un actionneur (7).

3. Composant micromécanique (1) selon l'une quelconque des revendications précédentes, dans lequel le capteur (6) est un capteur piézoélectrique (6) ou un capteur piézorésistif (6).

4. Composant micromécanique (1) selon l'une quelconque des revendications précédentes, dans lequel le ressort (4) respectif relie l'élément de suspension (5) respectif à l'élément de déviation (2) et le ressort (4) est agencé entre l'élément de suspension (5) respectif et l'élément de déviation (2).

5. Composant micromécanique (1) selon l'une quelconque des revendications précédentes, dans lequel le capteur (6) et/ou l'actionneur (7) fonctionnent sans hystérésis et sont en particulier constitués de matériaux piézoélectriques présentant un comportement de fonctionnement linéaire qui associe en particulier de manière unique un état de déformation du matériau piézoélectrique à un état de charge du matériau piézoélectrique.

6. Composant micromécanique (1) selon l'une quelconque des revendications précédentes, dans lequel le stockage de la charge électrique du capteur (6) présente, sans influences extrinsèques, une demi-vie supérieure à une minute, de manière préférée supérieure à cinq minutes.

7. Composant micromécanique (1) selon l'une quelconque des revendications précédentes, comprenant une unité d'évaluation conçue pour évaluer le signal de capteur et pour déterminer une position instantanée et/ou un changement de position de l'élément de déviation (2), dans lequel la position instantanée et/ou le changement de position résulte d'un mouvement périodique résonant, quasistatique et/ou non résonant de l'élément de déviation (2).

8. Composant micromécanique (1) selon l'une quelconque des revendications précédentes avec la variante b) de la revendication 1, dans lequel l'actionneur (7) est plus grand que le capteur (6), en particulier plus de deux fois plus grand, de manière préférée environ dix fois plus grand.

9. Composant micromécanique (1) selon l'une quelconque des revendications précédentes avec la variante b) de la revendication 1, dans lequel le capteur (6) est positionné de sorte qu'il subit une flexion élevée en cas de déviation de l'élément de déviation (2) et/ou que l'actionneur (7) et le capteur (6) présentent un axe de symétrie commun.

10. Composant micromécanique (1) selon l'une quelconque des revendications précédentes, dans lequel l'élément de suspension (5) est muni d'un élément piézoélectrique pouvant être utilisé à la fois comme capteur (6) et comme actionneur (7), et dans lequel le composant micromécanique comprend une unité de commutation conçue pour basculer entre un fonctionnement de capteur et un fonctionnement d'actionneur de l'élément piézoélectrique, en particulier dans lequel l'unité de commutation est conçue pour basculer périodiquement entre le fonctionnement de capteur et le fonctionnement d'actionneur.

11. Composant micromécanique (1) selon l'une quelconque des revendications précédentes, dans lequel l'élément de déviation (2) est conçu pour réfléchir et/ou réfracter et/ou diffracter la lumière incidente.

12. Composant micromécanique (1) selon l'une quelconque des revendications précédentes, dans lequel l'élément de déviation (2) est rotatif autour d'au moins deux axes de rotation de l'élément de déviation (2).

13. Composant micromécanique (1) selon l'une quelconque des revendications précédentes, dans lequel un état de vibration de l'élément de déviation mobile (2) peut être déterminé par l'intermédiaire d'une valeur de tension oscillante et/ou d'une valeur de courant oscillante du signal de capteur, une position moyenne de l'élément de déviation mobile (2) peut être déterminée par l'intermédiaire d'une amplitude de tension moyenne et une autodécharge du capteur (6) peut être déterminée par l'intermédiaire d'une chute de l'amplitude de tension moyenne et/ou d'une chute de l'amplitude de courant moyenne du signal de capteur.

14. Composant micromécanique (1) selon l'une quelconque des revendications précédentes, présentant quatre dispositifs de retenue (3),
dans lequel un premier dispositif de retenue présente un premier ressort (4) et un premier élément de suspension (5), et le premier ressort (4) et l'élément de déviation (2) sont reliés par l'intermédiaire d'un premier point de liaison (8) ;
dans lequel un deuxième dispositif de retenue (3) présente un deuxième ressort (4) et un deuxième élément de suspension (5), et le deuxième ressort (4) et l'élément de déviation (2) sont reliés par l'intermédiaire d'un deuxième point de liaison (8) ;
dans lequel un troisième dispositif de retenue (3) présente un troisième ressort (4) et un troisième élément de suspension (5), et le troisième ressort (4) et l'élément de déviation (2) sont reliés par l'intermédiaire d'un troisième point de liaison (8) ;
dans lequel un quatrième dispositif de retenue (3) présente un quatrième ressort (4) et un quatrième élément de suspension (5), et le quatrième ressort (4) et l'élément de déviation (2) sont reliés par l'intermédiaire d'un quatrième point de liaison (8) ;
dans lequel les premier à quatrième ressorts (4) et/ou les éléments de suspension (5) et/ou les points de liaison (8) sont en position de repos dans un plan comprenant l'élément de déviation (2) et respectivement deux des ressorts (4) et/ou éléments de suspension (5) et/ou points de liaison (8) sont agencés de manière symétrique par rapport à un axe orthogonal à un axe de symétrie de l'élément de déviation (2).

15. Composant micromécanique (1) selon l'une quelconque des revendications 1 à 13, dans lequel le ressort (4) respectif et l'élément de suspension (5) respectif sont en position de repos dans un plan qui ne coïncide pas avec un plan de l'élément de déviation (2).
